Europäisches Patentamt

European Patent Office

Office européen des brevets

(19)

(11) **EP 1 144 296 B1**

(12) **EUROPÄISCHE PATENTSCHRIFT**

| | |
|---|---|
| (45) Veröffentlichungstag und Bekanntmachung des Hinweises auf die Patenterteilung: **16.06.2004 Patentblatt 2004/25** | (51) Int Cl.⁷: **B65H 55/00**, F41G 7/32, F42B 15/04, G02B 6/44 |
| (21) Anmeldenummer: **99965377.7** | (86) Internationale Anmeldenummer: **PCT/DE1999/003740** |
| (22) Anmeldetag: **24.11.1999** | (87) Internationale Veröffentlichungsnummer: **WO 2000/037347 (29.06.2000 Gazette 2000/26)** |

(54) **AUSGABEVORRICHTUNG FUR DATENÜBERTRAGUNGSLEITUNGEN UND VERFAHREN ZUR HERSTELLUNG EINER AUSGABEVORRICHTUNG**

OUTPUT DEVICE FOR DATA TRANSMISSION LINES AND METHOD FOR PRODUCING AN OUTPUT DEVICE

DISPOSITIF DE DISTRIBUTION POUR LIGNES DE TRANSMISSION DE DONNEES, ET PROCEDE DE PRODUCTION D'UN TEL DISPOSITIF DE DISTRIBUTION

| | |
|---|---|
| (84) Benannte Vertragsstaaten: **DE FR GB IT** | • **RODER, Kuno D-85614 Eglharting (DE)** • **BRAUN, Helmut D-73230 Kirchheim-Teck (DE)** |
| (30) Priorität: **18.12.1998 DE 19858796** | |
| (43) Veröffentlichungstag der Anmeldung: **17.10.2001 Patentblatt 2001/42** | (74) Vertreter: **Hummel, Adam et al EADS Deutschland GmbH Patentabteilung 81663 München (DE)** |
| (73) Patentinhaber: **LFK-Lenkflugkörpersysteme GmbH 81663 München (DE)** | |
| (72) Erfinder: • **ALBERT, Elmar D-73272 Neidlingen (DE)** | (56) Entgegenhaltungen: **EP-A- 0 619 260     WO-A-88/06564 WO-A-90/05929     WO-A-90/10244 FR-A- 2 644 764     US-A- 4 752 043** |

**Beschreibung**

Die vorliegende Erfindung betrifft eine Ausgabevorrichtung für Datenübertargungsleitungen gemäß dem Oberbegriff des Patentanspruchs 1, sowie ein Verfahren zur Herstellung einer Ausgabevorrichtung für Datenübertragungsleitungen gemäß dem Oberbegriff des Patentanspruchs 7.

Ausgabevorrichtungen für Datenübertragungsleitungen finden Anwendung bei beweglichen, fernsteuerbaren Geräten, wie beispielsweise Raketen, Flugkörpern, Luftfahrzeugen, aber auch bei Landfahrzeugen, Wasserfahrzeugen und Unterwassergeräten, die über große Entfernungen von einer Starteinrichtung aus mit Hilfe einer Datenübertragungsleitung gelenkt werden sollen. Dabei wird die Datenübertragungsleitung mit einer hohen Geschwindigkeit, die zum Teil auch Überschallgeschwindigkeit erreichen kann, von wenigstens einer Spule bzw. einem Spulensystem abgezogen.

Die Lenkung und Steuerung z.B. eines Flugkörpers kann dann z. B. durch elektrische Signale über eine direkte Drahtverbindung zwischen dem Flugkörper und einer Bodenstation erfolgen. Dabei werden in der Regel zugentlastete Cu-Zwillingsleiter eingesetzt wobei jedoch der Nachteil besteht, daß nur niederfrequente Signale über eine relativ kurze Distanz übertragen werden können.

Durch die Verwendung von Lichtwellenleitern als Datenübertragungsleitungen können optische Signale hoher Bandbreite über große Strecken übertragen werden. Sogenannte Monomode-Lichtwellenleiter nähern sich dabei bereits der theoretisch geringsten Dämpfung an. Somit können die erforderlichen Daten mittels optischer Hilfsmittel über mehr als 100 km übertragen werden. Die normalerweise als Datenübertragungsleitung verwendeten Lichtwellenleiter bestehen im wesentlichen aus einem Glaskörper, der von einem Coating bzw. Kunststoffüberzug umgeben ist. Das Coating kann aus einer oder aus mehreren Schichten verschiedener Kunststoffarten bestehen, wobei es sich normalerweise um sehr weiche Kunststoffarten, wie z. B. Polyacrylat, handelt. Das Coating dient dem Schutz des Glaskörpers vor physikalischen und chemischen Einflüssen und mindert das Microbending, d. h. die Dämpfung des durch den Lichtwellenleiter hindurchgehenden Lichts infolge partieller Drücke auf den Lichtwellenleiter.

Die Datenübertragungsleitung ist in einer bekannten Ausgabevorrichtung als Wickelpaket auf einem Spulenkörper aufgewickelt. Dabei sind mehrere Lagen von Windungen unter Zugspannung aufgebracht und miteinander verklebt. Die Zugspannung bzw. der Wickelzug ist erforderlich, um dem Wickelpaket eine hohe Stabilität zu verleihen, die beim schnellen Abwickeln, z. B. von einer Rakete, notwendig ist. Andernfalls bestünde die Gefahr, daß mehrere Lagen gleichzeitig abgezogen werden und eine Schlaufenbildung erfolgt, die zum Abriß der Datenübertragungsleitung führt. Datenübertragungsleitungen aus Kunststoff bzw. mit einem Kunststoffüberzug, die als Wickelpaket auf einer Spule aufgewickelt sind, haben aber den Nachteil, daß der Kunststoff bzw. das Coating unter der gegebenen Beanspruchung eine große Kriechneigung bzw. Fließneigung zeigt. Dadurch ergibt sich eine Abweichung vom linearen Kraft-Verformungsverhalten. Unter dem Druck der Windungen lagern sich Makromoleküle und Molekülketten um, so daß sich ein viskoses Verhalten des Materials ergibt. Dadurch lockern sich die Windungen des Wickelpakets im Laufe der Zeit und es entstehen Störungen in der Ordnung des Wickelpakets. Einzelne Windungen verrutschen und beim Abwickeln im Betrieb besteht die erhöhte Gefahr, daß die Windungen unregelmäßig abgezogen werden und sich Schlaufen bilden, die zum Abriß führen.

In der FR 2 644 764 Al wird deshalb vorgeschlagen, daß die Anzahl der Lagen auf einer Spule nicht größer als 40 sein soll. Es wird daher ein Spulensystem gezeigt, das aus mehreren Spulen besteht, wovon jede nicht mehr als 40 Windungen besitzt. Die Begrenzung auf 40 Lagen soll das übermäßige Kriechen des Coatings verhindern, so daß keine relativen Verschiebungen der Windungen gegeneinander auftreten und die Wickelordnung erhalten bleibt. Die dort vorgeschlagene Konstruktion hat jedoch den Nachteil, daß eine Vielzahl von Spulen in einem System integriert und zusammengeschaltet werden müssen, was sehr aufwendig ist, zusätzliche Bauteile und damit zusätzliches Gewicht zur Folge hat, und eine genaue Abstimmung im Zusammenspiel der Spulen untereinander erfordert.

Aus dem US-Patent 4 752 043 sind weitere Überlegungen zum Verhindern bzw. Vermindern der Einflüsse von Microbending bekannt. Das Resultat dieser Überlegungen ist die Lehre, die Zugspannung mit zunehmender Lagenanzahl zu verringern. Bei sehr vielen Windungen wird jedoch das erwünschte Ergebnis nicht erreicht.

Es ist daher die Aufgabe der vorliegenden Erfindung, eine Ausgabevorrichtung für Datenübertragungsleitungen zu schaffen, durch die mit verhältnismäßig geringem Aufwand die Stabilität eines Wickelpakets mit sehr vielen Lagen von Windungen auch über einen längeren Zeitraum erhalten bleibt. Weiterhin soll ein Verfahren angegeben werden, das kostengünstig durchführbar ist und die Herstellung einer stabilen und sicheren Ausgabevorrichtung für Datenübertragungsleitungen mit großer Länge ermöglicht.

Diese Aufgabe wird gelöst durch die Ausgabevorrichtung für Datenübertragungsleitungen gemäß Patentanspruch 1 und durch das Verfahren zur Herstellung einer Ausgabevorrichtung für Datenübertragungsleitungen gemäß Patentanspruch 6. Weitere vorteilhafte Merkmale, Aspekte und Details der Erfindung ergeben sich aus den abhängigen Ansprüchen, der Beschreibung und den Zeichnungen.

Dadurch wird erreicht, daß die Windungen kein Kriechen oder Fließen zeigen, das die Stabilität der Wicklung beeinträchtigt, wobei die Windungen in ihrer Lage auf Dauer stabil bleiben. Die definierte Zugspannung der Windungen ist gerade so groß, daß ein Verrutschen der Windungen auch bei den gegebenen äußeren Einflüssen verhindert wird und dennoch kein störendes Kriechen auftritt. Die erfindungsgemäße Spule läßt sich maschinell kostengünstig mit einer definierten Zugspannung herstellen, wobei die Zugspannung leicht an das jeweils verwendete Material des Lichtwellenleiters angepaßt werden kann.

Dabei ist zumindest im unteren Bereich der Packung der Druck einer Windung auf die darunterliegende Lage kleiner als 0,6 N/mm². Die Windungen im Paket können mit einem Wickelzug aufgebracht sein, der von Lage zu Lage linear erhöht ist.

Vorzugsweise ist die maximale Zugspannung nach der Formel

$$F_{max} < 0{,}3 \, \frac{Newton}{mm^2} \, \frac{d(d \cdot N + D_s)}{N} + \frac{E \cdot d}{\sqrt[3]{E} \, 3D_s}$$

berechnet, wobei d der Durchmesser der Datenübertragungsleitung in mm, $D_S$ der Durchmesser des Spulenkörpers in mm, N die Gesamtzahl der Lagen des Pakets, E der Elastizitätsmodul der Datenübertragungsleitung in N/mm² und $d_E$ der Durchmesser in mm des für den Elastizitätsmodul relevanten Stoffes der Datenübertragungsleitung ist.

Die maximale Zugspannung der n-ten Windung kann nach der Formel

$$F_{max} \leq \frac{1 \, Newton}{N} \, n \; + \; 0{,}3 \; \frac{Newton}{mm^2} \, \frac{d(D_s - N \cdot d)}{N} \left(1 - \frac{n}{N}\right) + \frac{E \cdot d_E^3}{3D_s}$$

berechnet sein, wobei n die jeweilige Lagen-Nr., N die Gesamtzahl der Lagen des Pakets, d der Durchmesser der Datenübertragungsleitung in mm, $D_S$ der Durchmesser des Spulenkörpers in mm, E der Elastizitätsmodul der Datenübertragungsleitung in N/mm² $d_E$ der Durchmesser in mm des für den Elastizitätsmodul relevanten Stoffes der Datenübertragungsleitung ist.

Diese Maßnahmen führen dazu, daß ein stabiles Wickelpaket entsteht, und zwar auch bei großer Lagenzahl N. Hierzu ist es notwendig, die Zugspannung nach (4) möglichst gering zu halten; dadurch wird das Kriechen des Coatingmaterials der Faser so gering gehalten, daß das Wickelpaket stabil bleibt. Andererseits ist die Zugspannung nach (5) von Lage zu Lage zu erhöhen, aber so, daß die nach (5) berechnete Zugspannung nicht überschritten wird. Dies ist das Gegenteil zu den der US 4 752 043 entnehmbaren Lehre.

Vorteilhafterweise ist die Datenübertragungsleitung ein Monomode-Lichtwellenleiter mit einer oder mehreren Schichten aus Kunststoff, der bevorzugt mit einer Zugkraft von kleiner oder gleich 0,4 N auf den Spulenkörper aufgewickelt ist. Die Windungen können mit einem elastischen Kleber verklebt sein.

Bei dem erfindungsgemäßen Verfahren zur Herstellung einer Ausgabevorrichtung für Datenübertragungsleitungen, wird ein Spulenkörper mit einer Datenübertragungsleitung so bewickelt, daß mehrere Lagen von Windungen auf dem Spulenkörper ein Wickelpaket bilden, wobei die Windungen in jeder Lage mit einer maximalen Zugspannung oder -kraft aufgebracht werden, die vom Elastizitätsmodul der Datenübertragungsleitung abhängig ist. Dadurch kann auf einfache Weise und mit den herkömmlichen Bauteilen ein über einen langen Zeitraum stabiles Wickelpaket hergestellt werden.

Vorteilhafterweise wird mit dem erfindungsgemäßen Verfahren eine Ausgabevorrichtung, wie sie oben beschrieben ist, hergestellt. Bevorzugt wird nach dem Bewickeln des Spulenkörpers eine Temperaturbehandlung bei einer Temperatur von mehr als 35° C durchgeführt, wobei die Dauer der Temperaturbehandlung vorteilhafterweise 8 Stunden und mehr beträgt.

Die vorliegende Erfindung wird nachfolgende anhand der Zeichnungen beschrieben.

Es zeigen:

Fig. 1        einen Querschnitt eines Lichtwellenleiters als Datenübertragungsleitung in schematischer Darstellung;

Fig. 2        eine schematische Darstellung eines zylindrischen Spulenköpers, der zum Bewickeln mit der Datenübertragungsleitung von Fig. 1 vorgesehen ist;

Fig. 3        eine schematische Darstellung eines Querschnitts einer Spule der erfindungsgemäßen Ausgabevorrichtung;

Fig. 4        ein Segment einer Windung auf der erfindungsgemäßen Ausgabevorrichtung;

Fig. 5 den Druck in Abhängigkeit von der jeweiligen Lagenzahl $n_E$ bei einer Gesamtzahl von N Lagen;

Fig. 6a u.6b die nach der Erfindung maximal zulässige Zugspannung in Abhängigkeit von der Zahl der Lagen auf einen Spulenkörper bei einem üblichen Monomode-Lichtwellenleiter;

Fig. 7 eine erfindungsgemäße Ausgabevorrichtung im Längsschnitt als schematische Darstellung und

Fig. 8 eine Oberfläche eines Spulenköpers gemäß einer weiteren Ausführungsform der Erfindung.

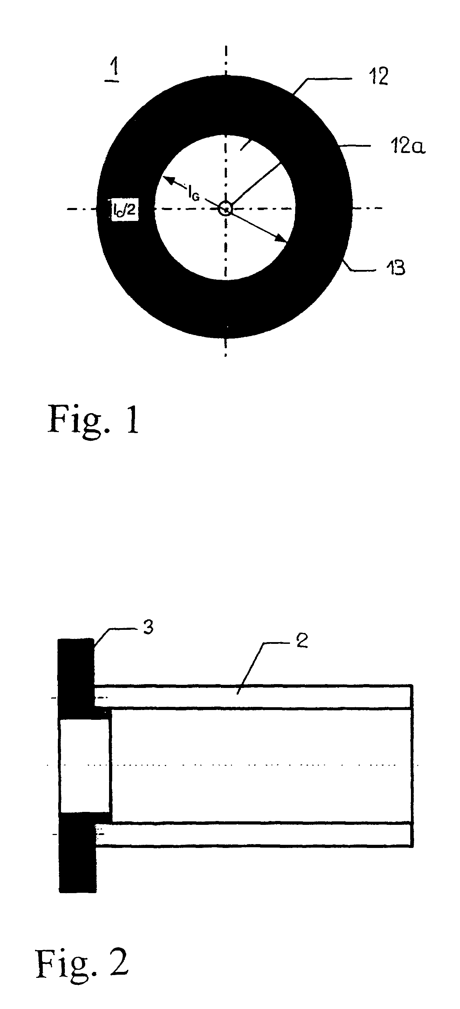

Figur 1 zeigt einen Querschnitt eines Lichtwellenleiters, wie er in der vorliegenden Erfindung zur Herstellung des Wickelpakets verwendet wird. Der Lichtwellenleiter 1 hat in seinem Inneren einen Glaskörper 12, der von einem Coating bzw. Kunststoffüberzug 13 umgeben ist. Durch das Coating 13, im vorliegenden Fall Polyacrylat, wird der Glaskörper 12 vor physikalischen und chemischen Einflüssen geschützt. Im Zentrum des Lichtwellenleiters 1 befindet sich ein lichtführender Kern 12a, das ein sogenanntes Modenfeld bildet, in dem die Datenübertragung stattfindet. Der Lichtwellenleiter 1 hat einen Glasdurchmesser von ca. 125 µm und einen Gesamtdurchmesser von ca. 250 µm. Entsprechend ist das Längenverhältnis vom Coating zum Glas bezogen auf den Querschnitt des Lichtwellenleiters

$$\frac{I_C}{I_G} = \frac{1}{1}. \tag{1}$$

Der lichtführende Kern 12a hat bei dem hier gezeigten Single-Mode-Lichtwellenleiter einen Durchmesser von ca. 9 µm.

Figur 2 zeigt einen relativ starren Spulenkörper 2 aus Keramik, der im vorliegenden Fall zylindrisch geformt und an einem Flansch 3 befestigt bzw. angeschraubt ist. Anstatt Metall können aber auch andere Materialien für den Spulenkörper 2 verwendet werden, so z. B. Metall oder Kunststoff. Beim Bewickeln des Spulenkörpers 2 werden mehrere Windungen aneinander gelegt. Somit entsteht eine Lage von Windungen, auf die dann die nächste Lage aufgewickelt wird. Die Windungen werden dabei mit einer maximalen Zugspannung bzw. -kraft aufgebracht, die vom Elastizitätsmodul des Lichtwellenleiters 1 bzw. der Datenübertragungsleitung abhängig ist. Durch die Einhaltung dieses Grenzwerts beim Wickelzug wird erreicht, daß bei einer längeren Lagerung keine Kriechvorgänge im Wickelpaket auftreten, die zur Lockerung der Windungen führen könnten, so daß kein unbeabsichtigtes Ablösen von Windungen erfolgt und beim Abwickeln nicht mehrere Windungen gleichzeitig herausgezogen werden. Die Stabilität der Spule wird erhöht. Sowohl die Windungen als auch die Lagen werden miteinander verklebt.

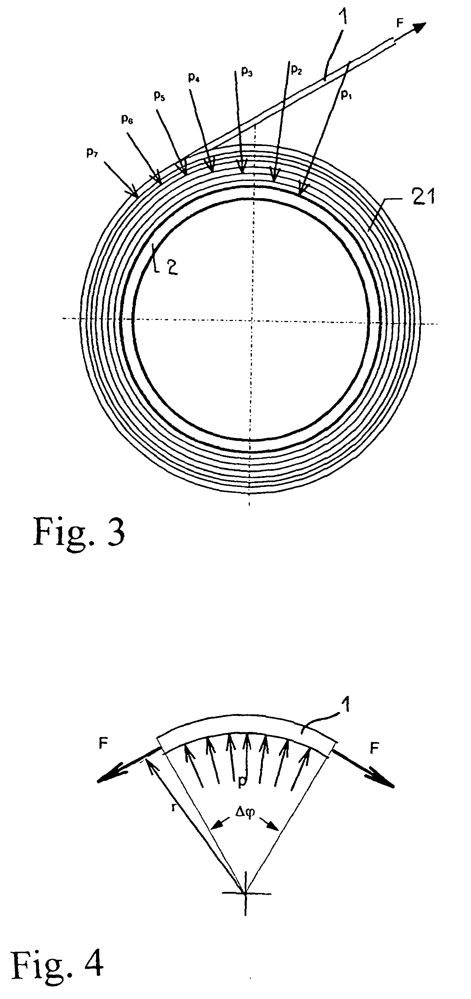

In Figur 3 ist der Aufbau einer Spule mit dem erfindungsgemäßen Wickelzug schematisch dargestellt. Auf dem Spulenkörper 2 befinden sich bereits einige Lagen 21 aus verschiedenen aneinanderliegenden Windungen. Die Lage n = 1 liegt direkt auf dem Spulenkörper 2 und die Gesamtzahl der Lagen beträgt N. Der Wickelzug ist durch den Kraftvektor F dargestellt. Er bewirkt, daß die Windungen n fest auf ihrer Unterlage, d. h. dem Spulenkörper 2 oder einer darunterliegenden Lage, aufliegen. Je steifer die Datenübertragungsleitung ist, desto größer muß der Wickelzug sein, um eine einwandfreie Wickelung zu ermöglichen. Ein größerer Wickelzug erleichtert zwar den Wickelvorgang, ist aber gemäß der vorliegenden Erfindung durch den definierten maximalen Wickelzug in Abhängigkeit vom Elastizitätsmodul des Lichtwellenleiters beschränkt.

Der theoretische Gesamtdruck, den eine Lage n auf die darunterliegende Lage ausübt, ergibt sich aus der Summe der Einzeldrücke zu

$$P_{N,n} = \sum_n^N p_n = \sum_n^N \frac{F}{d \cdot r_n}, \tag{2}$$

wobei $P_{N,n}$ der Druck ist, den die Windungen der n-ten Lage und der darüberliegenden Lagen auf die darunterliegende ausüben, bei einer Gesamtzahl von N-Lagen, und $p_n$ der Druck ist, den die Windung der n-ten Lage mit dem Radius $r_n$ radial nach innen infolge des Wickelzuges F erzeugt. Wie in der Figur 3 zu erkennen ist, führt der beim Wickeln der Spule aufgebrachte Wickelzug F zum Aufbau einer radialen Druckverteilung $p_n$ über den Spulenquerschnitt.

Figur 4 zeigt das freigeschnittene Stück einer Windung einer beliebigen Lage mit den daran angreifenden Kräften. F ist dabei die Kraft, die den Wickelzug erzeugt, r der Radius der Windung und p der sich ausbildende Druck. Infolge des Druckes p wird die Kraft

$$\Delta F_W = p \cdot d \cdot r \cdot \Delta\varphi \tag{3}$$

auf das Windungsstück übertragen, wobei d der Durchmesser der Datenübertragungsleitung ist.

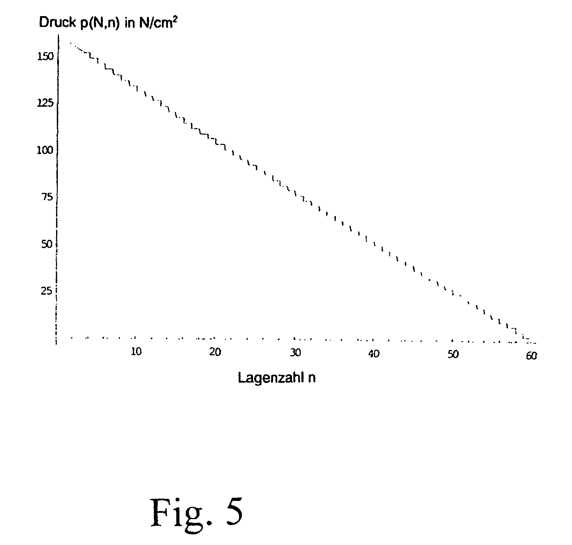

In Figur 5 ist der theoretische Druckverlauf ohne Berücksichtigung der Biegesteifigkeit der Datenübertragungsleitung in Abhängigkeit der Lagen dargestellt. Der Druck, den die Windungen aufeinander ausüben, ist dem Wickelzug F proportional. Da er umgekehrt proportional dem Radius r ist, tragen äußere Windungen weniger zum Druckaufbau bei als innere. Bei einer Gesamtzahl von N Lagen, z. B. 60, üben die Lagen von n bis N auf die darunter liegende Lage n - 1 den Druck p (N, n) aus. In Figur 5 ist dieser Druck p (N, n) in N/cm$^2$ gegenüber der Lagenzahl n aufgetragen. Der Durchmesser $D_S$ des Spulenkörpers 2 beträgt im vorliegenden Fall 140 mm, und der Wickelzug F beträgt 0,8 N ohne Berücksichtigung der Biegesteifigkeit. Die in den oben beschriebenen Figuren 3 und 4 gezeigte Zugspannung F in der Datenübertragungsleitung 1, die durch den Wickelzug erzeugt wird, gibt dem Wickelpaket bei mechanischer oder thermischer Belastung und beim schnellen Abziehen der Spule die notwendige Stabilität. Andererseits bewirkt die Zugspannung F und der daraus resultierende Druck $p_{N,n}$ ein Kriechverhalten des Coating-Materials. Dieses verändert sich jedoch wiederum mit der Zugspannung F. Bei der hier gezeigten Ausgabevorrichtung für Datenübertragungsleitungen ist die Zugspannung F auf einen genau definierten Wert beschränkt. Die Druckspannungen im Wickelpaket sind somit unterhalb einer kritischen Größe, weshalb kein Kriechen des Coatings erfolgt. Das Wickelpaket verharrt in einem stationären Zustand.

In der hier gezeigten erfindungsgemäßen Ausgabevorrichtung ist der Druck einer Windung auf die darunter liegende Lage im unteren Bereich, d. h. im Bereich von n = 1, kleiner als 0,6 N/mm$^2$. Daraus ergibt sich nach der oben gezeigten Gleichung (2) unter Berücksichtigung der Biegesteifigkeit der Datenübertragungsleitung die maximale Zugkraft bzw. der Wickelzug, mit der die Datenübertragungsleitung aufgewickelt werden soll zu

$$F_{max} < 0,3 \; \frac{N}{mm^2} \; \frac{d(d \cdot N + D_s)}{N} + \frac{E \cdot d_E^3}{3 D_s} \tag{4}$$

wobei d der Durchmesser der Datenübertragungsleitung ist, $D_S$ der Durchmesser des Spulenkörpers 2 ist, N die Anzahl der gesamten Lagen des Wickelpakets ist, E der Elastizitätsmodul der Datenübertragungsleitung 1 ist, $d_E$ der für den Elastizitätsmodul E relevante Durchmesser der Datenübertragungsleitung ist.

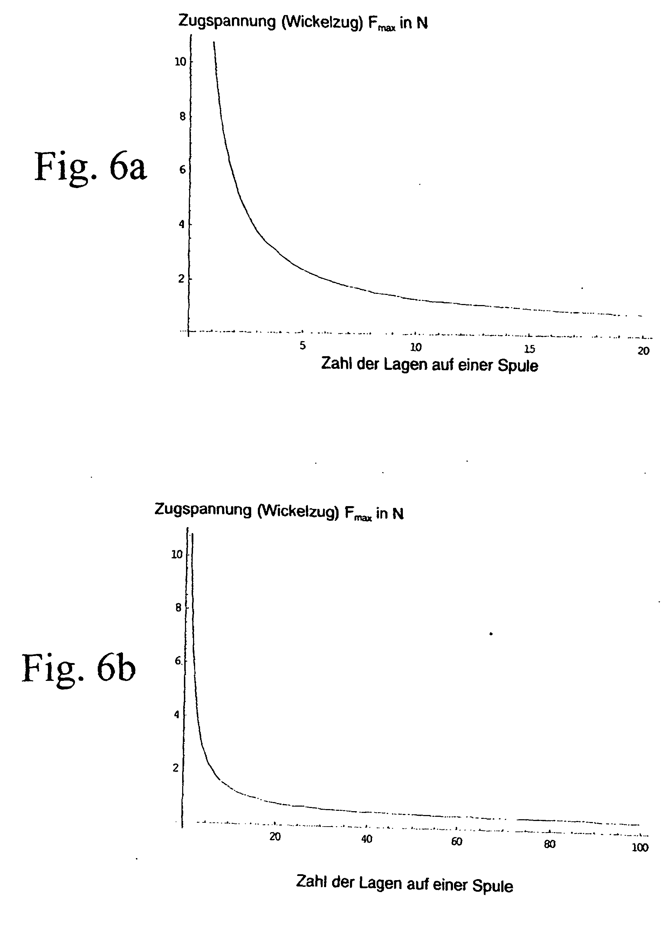

In den Figuren 6 a und 6 b ist die Anzahl N der Lagen, aus denen das gesamte Wickelpaket besteht, gegenüber dem maximalen Wickelzug $F_{max}$ für einen handelsüblichen Monomode Lichtwellenleiter mit 0,125 mm Glasdurchmesser und 0,250 mm Gesamtdurchmesser aufgetragen.

Der Wickelzug kann nun pro Lage geringfügig linear erhöht werden. Dabei besteht der Zusammenhang

$$F_{max} \leq \frac{1\,Newton}{N}\,n \; + \; 0,3 \; \frac{Newton}{mm^2} \; \frac{d\left(D_s - N \cdot d\right)}{N}\left(1 - \frac{n}{N}\right) + \frac{E \cdot d_E^3}{3 D_s} \tag{5}$$

Mit dieser Gleichung läßt sich die nicht zu überschreitende bzw. maximale Zugspannung $F_{max, n}$ bzw. der Wickelzug des Lichtwellenleiters 1 beim Wikkeln der Windungen der n-ten Lage berechnen. Je mehr die Größe $F_{max, n}$ unterschritten wird, desto stabiler ist das Wickelpaket gegen Kriechen.

Ein trotz der Maßnahme einer nicht zu überschreitenden Zugspannung $F_{max,n}$ noch auftretendes Kriechen, das Spannungen im Wickelpaket zur Folge hat, wird durch die Verwendung eines elastischen Klebers ausgeglichen. Dadurch werden Klebeverbindungen nicht sofort aufgerissen und ein geringfügiges Kriechen des Coatings kann zugelassen werden. Wenn die infolge der Zugspannung beim Wickeln aufgebauten Druckspannungen im Wickelpaket durch das Kriechen des Coatings unter eine kritische Größe fallen, hört das Kriechen ganz auf. Das Wickelpaket verharrt in einem stationären Zustand. Um diesen Zustand schnell und unter definierten Bedingungen zu erreichen, wird die Spule nach dem Wickeln bei erhöhter Temperatur gelagert.

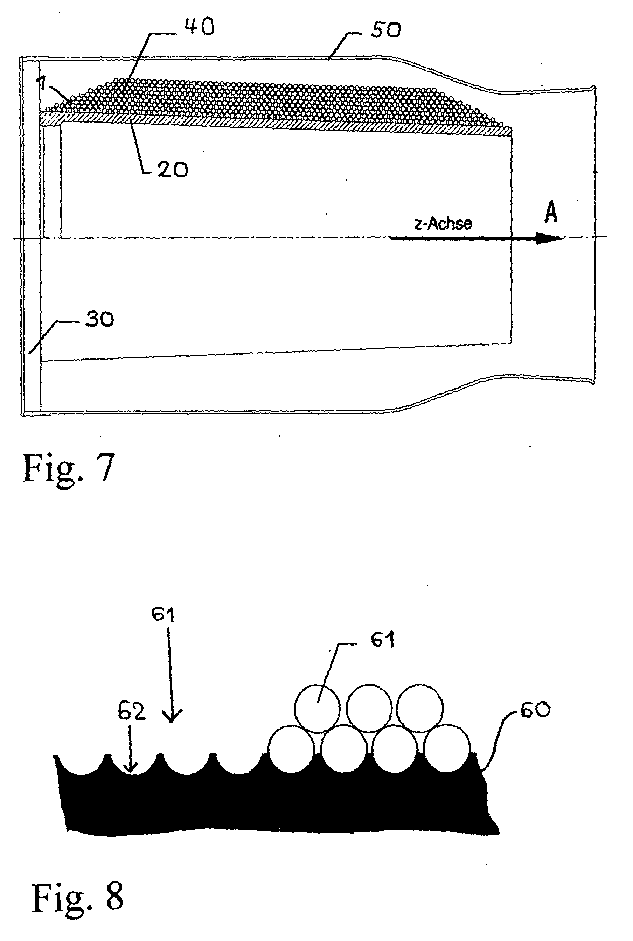

Figur 7 zeigt die erfindungsgemäße Ausgabevorrichtung als schematische Darstellung. In dieser Ausführungsform ist der Spulenkörper 20 konisch bzw. kegelförmig geformt und an einem Flansch 30 angebracht. Das Wikkelpaket 40 besteht aus einer Vielzahl von Windungen des Lichtwellenleiters 1, der auf den Spulenkörper 20 aufgewickelt ist. Der Lichtwellenleiter 1 ist verklebt, so daß die Windungen eine erhöhte Stabilität aufweisen. Er ist wie oben beschrieben, mit einer definierten Zugspannung aufgebracht, die von seinem Elastizitätsmodul E abhängt. Dadurch ist gewährleistet, daß keine Lockerung des Wickelpaket 40 aufgrund von Kriechen oder Fließen des Coatings des Lichtwellenleiters 1 auftritt. Das hier gezeigte Spulensystem ist in einer Hülle 50 enthalten. Die Hülle 50 ist an ihrem hinteren Ende geöffnet, so daß der Lichtwellenleiter 1 in Richtung der z-Achse abgezogen werden kann, wie durch Pfeil A dargestellt. Die maximale Zugspannung beträgt erfindungsgemäß weniger als 0,6 N/mm$^2$ und ist für die untersten Lagen nach der oben gezeigten Gleichung 4 und für die weiteren Lagen nach der oben gezeigten Gleichung 5 berechnet.

Bild 8 zeigt die Oberfläche eines Spulenkörpers 60 gemäß einer weiteren vorteilhaften Ausführungsform der vorliegenden Erfindung. Die äußere Oberfläche 61 des Spulenkörpers 60 ist mit Rillen 62 versehen, die als Führung für den Lichtwellenleiter 1 dienen. Anstatt der Rillen 62 bzw. Vertiefungen kann auch eine Spirale bzw. spiralartige Nut oder Vertiefung vorgesehen sein, die sich entlang der konischen oder zylindrischen Oberfläche des Spulenkörpers 60 erstreckt. Beim Bewickeln des Spulenkörpers 60 wird die Datenübertragungsleitung bzw. der Lichtwellenleiter 1 in die Rillen 62 bzw. in die Spirale eingelegt. Dadurch wird die Druckkraft, die infolge der Zugspannung beim Bewickeln auf den Lichtwellenleiter 1 wirkt, auf eine größere Auflagefläche verteilt, so daß ein Kriechen oder Fließen des Lichtwellenleiters 1 verhindert bzw. reduziert wird. Eine Verformung und damit verbundene Lockerung des Lichtwellenleiters 1 wird dadurch vermieden und die Windungen erhalten eine zusätzliche Stabilität. Darüber hinaus ist die unterste Lage auch bei einem geringen Wickelzug gegen ein Verrutschen entlang der Oberfläche 61 des Spulenkörpers 60 gesichert.

Allgemein liegt der Erfindung der Gedanke zugrunde, daß sich das Kriechen als Funktion der Zeit durch die Gleichungen

$$\Delta d = a \cdot t^{b} \tag{6a}$$

bzw.

$$\Delta d = a_1 \cdot b_1 \cdot \ln(1 + t) \tag{6b}$$

beschreiben läßt. Dabei ist $\Delta d$ die Änderung des Lichtwellenleiterdurchmessers, und $a$, $a_1$ und $b_1$ sind Parameter, die sowohl vom Coatingmaterial, der Last bzw. des Druckes infolge des Wickelzuges und von der Temperatur abhängig sind. Die betrachtete Zeit ist durch $t$ dargestellt.

Für kleine Zeiten $t$ ergibt Gleichung (6a) eine gute Annäherung an die experimentell ermittelten Kriechkurven des Coatings der Lichtwellenleiter. Für größere Zeiten gilt die logarithmische Darstellung entsprechend Gleichung (6b). Lichtwellenleiter verschiedener Herstellung haben ein unterschiedliches Kriechverhalten.

Durch die Begrenzung des Wickelzugs auf einen definierten Wert, der vom Material der aufzuwickelnden Datenübertragungsleitung abhängig ist, wird das Kriechen weitgehend verhindert und die Stabilität erhöht, so daß die Windungen und Lagen auch bei mechanischen Einflüssen wie Vibration, Schock und Stoß, sowie bei thermischer Belastung über lange Zeiträume fixiert bleiben. Damit ist ein sicheres, schnelles Abwickeln des Lichtwellenleiters im Einsatz gewährleistet. Bei dem dynamischen, sehr schnellen Abwickelvorgang bleibt das Wickelpaket in seiner stabilen, geordneten Form und ein gleichzeitiges Ablösen mehrerer Windungen oder ein unbeabsichtigtes Herausziehen einzelner Windungen oder Windungspakete wird vermieden. Auch während einer langen Lagerzeit und beim Transport bleibt die notwendige Stabilität und die Ordnung der Windungen erhalten. Die Erfindung kann auf kostengünstige Weise durch entsprechende Einstellung des Wickelzuges bei der Fertigung realisiert werden.

Die erfindungsgemäße Ausgabevorrichtung kann insbesondere zur Signalübertragung zwischen einem bewegten Objekt und einer Basisstation eingesetzt werden. Dabei kann das Objekt z. B. fernbedient sein, beispielsweise ein ferngelenktes Luftfahrzeug. Die Ausgabevorrichtung kann aufgrund ihrer leichten und kleinen Bauweise im Gerät bzw. Objekt mitgeführt werden oder sich im Bereich der Basis- bzw. Kontrollstation befinden.

**Patentansprüche**

1.   Ausgabevorrichtung für Datenübertragungsleitungen, die zur Datenübertragung zwischen einem bewegten Objekt und einer Station dienen, mit einem Spulenkörper (2; 20; 60) auf dem eine Datenübertragungsleitung (1 ) in Form einer Packung aus mehreren Lagen (21) von Windungen aufgewickelt ist, **dadurch gekennzeichnet, daß**

   -   die Windungen in jeder Lage (21) mit einer definierten Zugspannung oder

- kraft aufgebracht sind, deren maximaler Wert aus den Durchmessern von Datenübertragungsleitung (1) und Spulenkörper (2; 20; 60), dem Elastizitätsmodul der Datenübertragungsleitung (1) und der Gesamtzahl der Lagen (21) der Packung berechnet ist, um eine Beeinträchtigung der Stabilität der Windungen infolge von durch Kriechen verursachten Verformungen der Datenübertragungsleitung zu verhindern, wobei

- zumindest im unteren Bereich der Packung der Druck einer Windung auf die darunterliegende Lage (21) kleiner ist als 0,6 N/mm$^2$ (wobei N für die Einheit Newton steht) und

- die Windungen im Paket mit einem Wickelzug (Zugspannung) aufgebracht sind, der von Lage (21) zu Lage (21) linear erhöht ist.

2. Ausgabevorrichtung nach Anspruch 1, **dadurch gekennzeichnet, daß** die maximale Zugspannung nach der Formel

$$F_{max} < 0,3 \, \frac{Newton}{mm^2} \, \frac{d(d \cdot N + D_s)}{N} + \frac{E \cdot d_E^3}{3D_s}$$

berechnet ist, wobei d der Durchmesser der Datenübertragungsleitung (1) in mm, $D_s$ der Durchmesser des Spulenkörpers (2; 20; 60) in mm, N die Gesamtzahl der Lagen (21) des Pakets, E der Elastizitätsmodul der Datenübertragungsleitung (1) in Newton pro mm$^2$ und $d_E$ der Durchmesser in mm des für den Elastizitätsmodul relevanten Stoffes der Datenübertragungsleitung (1) ist.

3. Ausgabevorrichtung nach Anspruch 1 oder 2, **dadurch gekennzeichnet, daß** die maximale Zugspannung der n-ten Windung nach der Formel

$$F_{max} \leq \frac{1 \, Newton}{N} \, n \, + \, 0,3 \, \frac{Newton}{mm^2} \, \frac{d(D_s - N \cdot d)}{N} \left( 1 - \frac{n}{N} \right) + \frac{E \cdot d_E^3}{3D_s}$$

berechnet ist, wobei n die jeweilige Lagennummer, N die Gesamtzahl der Lagen (21) des Pakets, d der Durchmesser der Datenübertragungsleitung (1) in mm, $D_s$ der Durchmesser des Spulenkörpers (2; 20; 60) in mm, E der Elastizitätsmodul der Datenübertragungsleitung (1) in Newton pro mm$^2$ und $d_E$ der Durchmesser in mm des für den Elastizitätsmodul relevanten Stoffes der Datenübertragungsleitung (1) ist.

4. Ausgabevorrichtung nach einem der vorhergehenden Ansprüche, **dadurch gekennzeichnet, daß** die Datenübertragungsleitung (1) ein Monomode-Lichtwellenleiter mit einer oder mehreren Schichten aus Kunststoff ist, der mit einer Zugkraft von kleiner oder gleich 0,47 N auf den Spulenkörper(2; 20; 60) aufgewickelt ist (wobei N für die Einheit Newton steht).

5. Ausgabevorrichtung nach einem der vorhergehenden Ansprüche, **dadurch gekennzeichnet, daß** die Windungen mit einem elastischen Kleber verklebt sind.

6. Ausgabevorrichtung nach einem der vorhergehenden Ansprüche, **dadurch gekennzeichnet, daß** der Spulenkörper (60) an seiner Oberfläche (61) Vertiefungen (62) aufweist.

7. Verfahren zur Herstellung einer Ausgabevorrichtung für Datenübertragungsleitungen, bei dem ein Spulenkörper (2; 20; 60) mit einer Datenübertragungsleitung so bewickelt wird, daß mehrere Lagen (21) von Windungen auf dem Spulenkörper (2; 20; 60) ein Wickelpaket bilden, **dadurch gekennzeichnet, daß** die Windungen in jeder Lage (21) mit einer definierten Zugspannung oder -kraft aufgebracht werden, deren maximaler Wert aus den Durchmessern von Datenübertragungsleitung (1) und Spulenkörper (2; 20; 60), dem Elastizitätsmodul der Datenübertragungsleitung (1) und der Gesamtzahl der Lagen (21) der Packung berechnet ist, um eine Beeinträchtigung der Stabilität der Windungen infolge von durch Kriechen verursachten Verformungen der Datenübertragungsleitung zu verhindern, wobei

- zumindest im unteren Bereich der Packung der Druck einer Windung auf die darunterliegende Lage (21) kleiner gehalten wird als 0,6 N/mm$^2$ (wobei N für die Einheit Newton steht) und

-   die Windungen im Paket mit einem Wickelzug (Zugspannung) aufgebracht werden, der von Lage (21) zu Lage (21) linear erhöht ist.

8.  Verfahren nach Anspruch 7, **dadurch gekennzeichnet, daß** eine Ausgabevorrichtung nach einem der Ansprüche 1 bis 8 hergestellt wird.

9.  Verfahren nach Anspruch 7 oder 8, **dadurch gekennzeichnet, daß** nach dem Bewickeln des Spulenkörpers (2; 20; 60) eine Temperaturbehandlung durchgeführt wird.

10. Verfahren nach Anspruch 9, **dadurch gekennzeichnet, daß** die Temperaturbehandlung bei einer Temperatur von mehr als 35 Grad Celsius mit einer Dauer von mindestens 8 Stunden durchgeführt wird.

**Claims**

1.  Delivery device for data-transmission lines which are used for data transmission between a moving object and a station, having a spool (2; 20; 60) on which a data-transmission line (1) is wound in the form of an assembly comprising a plurality of layers (21) of turns,
    **characterised in that**

    -   the turns in each layer (1) are applied with a defined tensile stress or force, the maximum value of which is calculated from the diameters of the data-transmission line (1) and the spool (2; 20; 60), the modulus of elasticity of the data-transmission line (1) and the total number of layers (21) of the assembly, in order to avoid compromising the stability of the turns as a result of deformations of the data-transmission line due to creep,
    -   the pressure of a turn on the layer (21) underneath being less than 0.6 N/mm$^2$, at least in the lower region of the assembly (N standing for the unit newton), and
    -   the turns in the stack being applied with a winding tension (tensile stress) which is increased linearly from layer (21) to layer (21).

2.  Delivery device according to Claim 1, **characterised in that** the maximum tensile stress is calculated according to the formula

$$F_{max} < 0.3 \, \frac{newton}{mm^2} \, \frac{d(d \cdot N + D_S)}{N} + \frac{E \cdot d_E^3}{3D_s},$$

where d is the diameter of the data-transmission line (1) in mm, $D_S$ is the diameter of the spool (2; 20; 60) in mm, N is the total number of layers (21) of the stack, E is the modulus of elasticity of the data-transmission line (1) in newtons per mm$^2$ and $d_E$ is the diameter in mm of the material of the data-transmission line (1) relevant to the modulus of elasticity.

3.  Delivery device according to Claim 1 or 2, **characterised in that** the maximum tension of the n-th turn is calculated according to the formula

$$F_{max} \leq \frac{1 \, newton}{N} n + 0.3 \, \frac{newton}{mm^2} \, \frac{d(D_S - N \cdot d)}{N} \left(1 - \frac{n}{N}\right) + \frac{E \cdot d_E^3}{3D_S},$$

where n is the layer number in question, N is the total number of layers (21) of the stack, d is the diameter of the data-transmission line (1) in mm, $D_S$ is the diameter of the spool (2; 20; 60) in mm, E is the modulus of elasticity of the data-transmission line (1) in newtons per mm$^2$ and $d_E$ is the diameter in mm of the material of the data-transmission line (1) relevant to the modulus of elasticity.

4.  Delivery device according to one of the preceding claims, **characterised in that** the data-transmission line (1) is a single-mode optical fibre having one or more levels of plastic, which is wound on the spool (2; 20; 60) with a tensile force of less than or equal to 0.47 N (N standing for the unit newton).

5. Delivery device according to one of the preceding claims, **characterised in that** the turns are adhesively bonded with an elastic adhesive.

6. Delivery device according to one of the preceding claims, **characterised in that** the spool (60) has indentations (62) on its surface (61).

7. Method for the production of an delivery device for data-transmission lines, in which a spool (2; 20; 60) is wound with a data-transmission line so that a plurality of layers (21) of turns form a winding stack on the spool (2; 20; 60), **characterised in that** the turns in each layer (21) are applied with a defined tensile stress or force, the maximum value of which is calculated from the diameters of the data-transmission line (1) and the spool (2; 20; 60), the modulus of elasticity of the data-transmission line (1) and the total number of layers (21) of the assembly, in order to avoid compromising the stability of the turns as a result of deformations of the data-transmission line due to creep,

- the pressure of a turn on the layer (21) underneath being kept less than 0.6 N/mm$^2$, at least in the lower region of the assembly (N standing for the unit newton), and
- the turns in the stack being applied with a winding tension (tensile stress) which is increased linearly from layer (21) to layer (21).

8. Method according to Claim 7, **characterised in that** a delivery device according to one of Claims 1 to 8 is produced.

9. Method according to Claim 7 or 8, **characterised in that** a heat treatment is carried out after the spool (2; 20; 60) has been wound.

10. Method according to Claim 9, **characterised in that** the heat treatment is carried out at a temperature of more than 35 degrees Celsius with a duration of at least 8 hours.

## Revendications

1. Dispositif de distribution pour lignes de transmission de données qui servent à la transmission de données entre un objet mobile et une station, avec une armature de bobine (2, 20, 60) sur laquelle est enroulée une ligne de transmission de données (1) sous forme d'un paquet de plusieurs couches d'enroulement,
   **caractérisé en ce que**

   - les enroulements sont appliqués dans chaque couche (21) avec un effort de tension défini ou une force de traction définie dont la valeur maximale est calculée à partir des diamètres de la ligne de transmission de données (1) et de l'armature de bobine (2, 20, 60), du module d'élasticité de la ligne de transmission (1) et du nombre total de couches (21) du paquet afin d'éviter une influence défavorable sur la stabilité des enroulements suite à des déformations de la ligne de transmission de données causées par fluage, dans lequel
   - au moins dans la zone inférieure du paquet la pression d'un enroulement sur la couche sous-jacente (21) est inférieure à 0,6 N/mm2 (N représentant l'unité Newton) et
   - les enroulements dans le paquet sont appliqués avec une force d'enroulement (effort de tension) qui est augmentée linéairement de couche (21) en couche (21).

2. Dispositif de distribution pour lignes de transmission de données selon la revendication 1, **caractérisé en ce que** l'effort de tension maximale est calculé d'après la formule

$$F_{max} < 0,3\frac{Newton}{mm^2}\frac{d(d \cdot N + D_s)}{N} + \frac{E \cdot d_\varepsilon^3}{3D_s}$$

dans laquelle d est le diamètre de la ligne de transmission de données (1) en mm, D le diamètre de l'armature de la bobine (2, 20, 60) en mm, N le nombre total de couches (21) du paquet, E le module d'élasticité de ligne de transmission de données (1) en Newton par mm2 et d$\varepsilon$ le diamètre en mm du matériau de la ligne de transmission de données (1) important pour le module d'élasticité.

**3.** Dispositif de distribution pour lignes de transmission de données selon la revendication 1 ou 2, **caractérisé en ce que** l'effort de tension maximal du nième enroulement est calculé d'après la formule

$$F_{\max} \leq \frac{1 Newton}{N} n + 0,3 \frac{Newton}{mm^2} \frac{d(D_s - N \cdot d)}{N} \left(1 - \frac{n}{N}\right) + \frac{E \cdot d_\varepsilon^3}{3 D_s}$$

dans laquelle n est le numéro respectif de la couche, N le nombre total de couches (21) du paquet, d le diamètre de la ligne de transmission de données (1) en mm, D le diamètre de l'armature de la bobine (2, 20, 60) en mm, E le module d'élasticité de ligne de transmission de données (1) en Newton par mm2 et $d_\varepsilon$ le diamètre en mm du matériau de la ligne de transmission de données (1) important pour le module d'élasticité.

**4.** Dispositif de distribution pour lignes de transmission de données selon l'une quelconque des revendications précédentes, **caractérisé en ce que** la ligne de transmission de données (1) est un câble à fibre optique mono-mode avec une ou plusieurs couches en matière synthétique, lequel est enroulé avec une force de traction inférieure ou égale à 0,47 N sur l'armature de la bobine (2, 20, 60) (N représentant l'unité Newton).

**5.** Dispositif de distribution pour lignes de transmission de données selon l'une quelconque des revendications précédentes, **caractérisé en ce que** les enroulements sont collés avec une colle élastique.

**6.** Dispositif de distribution pour lignes de transmission de données selon l'une quelconque des revendications précédentes, **caractérisé en ce que** l'armature de la bobine (60) présente des évidements (62) à sa surface (61).

**7.** Procédé de fabrication d'un dispositif de distribution pour lignes de transmission de données, dans lequel une armature de bobine (2, 20, 60) est enroulée avec une ligne de transmission de donnée de manière telle que plusieurs couches (21) d'enroulements forment un paquet d'enroulement sur l'armature de la bobine (2, 20, 60), **caractérisé en ce que** les enroulements sont appliqués sur chaque couche (21) avec un effort de tension défini ou une force de traction définie dont la valeur maximale est calculée à partir des diamètres de la ligne de transmission de données (1) et de l'armature de bobine (2, 20, 60), du module d'élasticité de la ligne de transmission (1) et du nombre total de couches (21) du paquet afin d'éviter une influence défavorable sur la stabilité des enroulements suite à des déformations de la ligne de transmission de données causées par fluage, dans lequel

- au moins dans la zone inférieure du paquet la pression d'un enroulement sur la couche sous-jacente (21) est inférieure à 0,6 N/mm2 (N représentant l'unité Newton) et
- les enroulements dans le paquet sont appliqués avec une force d'enroulement (effort de tension) qui est augmentée linéairement de couche (21) en couche (21).

**8.** Procédé selon la revendication 7, **caractérisé en ce qu'**un dispositif de distribution est fabriqué selon l'une quelconque des revendications 1 à 8.

**9.** Procédé selon la revendication 7 ou 8, **caractérisé en ce qu'**un traitement thermique est effectué après le bobinage de l'armature de la bobine (2, 20, 60).

**10.** Procédé selon la revendication 9, **caractérisé en ce que** le traitement thermique est effectué à une température supérieure à 35 degrés Celsius avec une durée d'au moins 8 heures.

Fig. 1

Fig. 2

Fig. 3

Fig. 4

Fig. 5

Zugspannung (Wickelzug) $F_{max}$ in N

Fig. 6a

Zahl der Lagen auf einer Spule

Zugspannung (Wickelzug) $F_{max}$ in N

Fig. 6b

Zahl der Lagen auf einer Spule

Fig. 7

Fig. 8